(19) **Europäisches Patentamt / European Patent Office / Office européen des brevets**

(11) **EP 4 764 585 A1**

(12) **DEMANDE DE BREVET EUROPEEN**

(43) Date de publication:
**24.06.2026 Bulletin 2026/26**

(21) Numéro de dépôt: **25223133.7**

(22) Date de dépôt: **12.12.2025**

(51) Classification Internationale des Brevets (IPC):
*G01S 5/00* *(2006.01)*

(52) Classification Coopérative des Brevets (CPC):
**G01S 5/012; G01S 5/0278;** G01S 5/0205

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **20.12.2024 FR 2414951**

(71) Demandeur: **FONDATION B-COM**
**35510 Cesson-Sévigné (FR)**

(72) Inventeurs:
• **KHALEGHI, Hamidreza**
**35510 CESSON-SEVIGNE (FR)**
• **LUCIDARME, Thierry**
**35450 LIVRE-SUR-CHANGEON (FR)**

(74) Mandataire: **Jacobacci & Partners France**
**32, rue de l'Arcade**
**75008 Paris (FR)**

(54) **PROCÉDÉ ET MODULE ÉLECTRONIQUE DE DÉTECTION DE LA POSITION INTÉRIEURE OU EXTÉRIEURE D'UN DISPOSITIF ÉLECTRONIQUE**

(57) Dans un procédé de détection de la position intérieure ou extérieure d'un dispositif électronique échangeant un signal porté par des ondes électromagnétiques avec un système de télécommunication distant, on prévoit les étapes suivantes :
- mesure d'une valeur ($L_k$) d'une grandeur caractéristique du signal échangé ;
- application de la valeur mesurée ($L_k$) en entrée d'un filtre de Kalman (5) produisant en sortie une estimation filtrée ($E_k$) de ladite grandeur ;
- comparaison d'une valeur statistique ($T_k^2$) déterminée en fonction de ladite estimation filtrée ($E_k$) à un seuil ($\gamma$) afin de détecter la position intérieure ou extérieure du dispositif électronique (M).
Un module électronique associé est également décrit.

**Fig.2**

## Description

La présente invention concerne le domaine technique des télécommunications.

L'invention concerne en particulier un procédé de détection de la position intérieure ou extérieure d'un dispositif électronique et un module électronique associé.

## Etat de la technique

On a déjà cherché, par exemple dans l'article "Indoor outdoor user discrimination in mobile wireless networks" de E. Villebrun, A. Ben Hadj Alaya, Y. Boursier et N. Noisette, in IEEE Vehicular Technology Conference, septembre 2006, à détecter la position intérieure ou extérieure d'un terminal mobile, afin par exemple de lui allouer des ressources particulières du réseau de télécommunication en fonction de la position estimée.

De telles techniques sont relativement simples à mettre en œuvre, mais leur fiabilité est limitée, ce qui diminue leur intérêt pratique.

Des solutions basées sur l'intelligence artificielle ont été proposées, mais nécessitent quant à elles des ressources de calcul importantes, ce qui les rend elles aussi difficilement utilisables en pratique.

## Présentation de l'invention

Dans ce contexte, l'invention propose un procédé de détection de la position intérieure ou extérieure d'un dispositif électronique (par exemple un terminal mobile) échangeant un signal porté par des ondes électromagnétiques avec un système de télécommunication distant, le procédé comprenant les étapes suivantes :

- mesure d'une valeur d'une grandeur caractéristique du signal échangé ;
- application de la valeur mesurée en entrée d'un filtre de Kalman produisant en sortie une estimation filtrée de ladite grandeur ;
- comparaison d'une valeur statistique déterminée en fonction de ladite estimation filtrée à un seuil afin de détecter la position intérieure ou extérieure du dispositif électronique.

Le filtre de Kalman peut être mis en œuvre facilement et permet d'améliorer la robustesse de la détection.

La valeur statistique peut dépendre par exemple d'un rapport de vraisemblance de deux hypothèses statistiques respectivement représentatives des positions intérieures et des positions extérieures du dispositif électronique.

La grandeur susmentionnée peut être un logarithme d'un rapport entre une puissance utile du signal et une puissance de perturbations affectant ce signal. Cette grandeur est par exemple un logarithme d'un rapport signal sur interférences et bruit, ou d'un rapport signal sur bruit. Selon d'autres possibilités de réalisation, la grandeur peut être une puissance du signal reçu, ou la puissance de réception d'un signal de référence, ou encore le logarithme d'une de ces grandeurs.

La comparaison susmentionnée peut utiliser en pratique un test de rapport de vraisemblance généralisé.

Comme expliqué dans la description qui suit, la valeur statistique peut dans certains modes de réalisation être calculée par mise au carré de la différence entre l'estimation filtrée et une valeur prédéterminée, ce qui permet une mise en œuvre très simple.

Le seuil peut quant à lui être déterminé en fonction d'un taux de fausse alarme souhaité.

Le procédé peut comprendre une étape au cours de laquelle sont allouées, au dispositif électronique et en fonction de la position estimée, des ressources d'un réseau de télécommunication comprenant le système de télécommunication distant.

L'invention propose également un module électronique de détection de la position intérieure ou extérieure d'un dispositif électronique échangeant un signal porté par des ondes électromagnétiques avec un système de télécommunication distant, caractérisé par :

- un filtre de Kalman configuré pour recevoir (en entrée) une valeur d'une grandeur caractéristique du signal échangé et produire (en sortie) une estimation filtrée de ladite grandeur ;
- une unité de comparaison configurée pour comparer une valeur statistique déterminée en fonction de ladite estimation filtrée à un seuil afin de détecter la position intérieure ou extérieure du dispositif électronique.

L'unité de comparaison peut être configurée pour calculer la valeur statistique par mise au carré de la différence entre l'estimation filtrée précitée et une valeur prédéterminée, comme c'est le cas dans l'exemple décrit dans la suite.

Le module électronique peut être intégré dans le dispositif électronique ou dans le système de télécommunication distant, voire dans un autre dispositif électronique.

**Description détaillée de l'invention**

De plus, diverses autres caractéristiques de l'invention ressortent de la description annexée effectuée en référence aux dessins qui illustrent des formes, non limitatives, de réalisation de l'invention et où :

- la figure 1 est un schéma représentant un contexte d'utilisation de l'invention ;
- la figure 2 représente des éléments d'un module électronique permettant la détection de la position intérieure ou extérieure d'un dispositif électronique ;
- la figure 3 est un logigramme montrant les étapes d'un procédé de détection de cette position intérieure ou extérieure ;
- la figure 4 représente l'évolution d'une valeur statistique utilisé au sein du module électronique de la figure 2, lequel inclut un filtre de Kalman ; et
- la figure 5 représente l'évolution de la même valeur statistique en l'absence du filtre de Kalman.

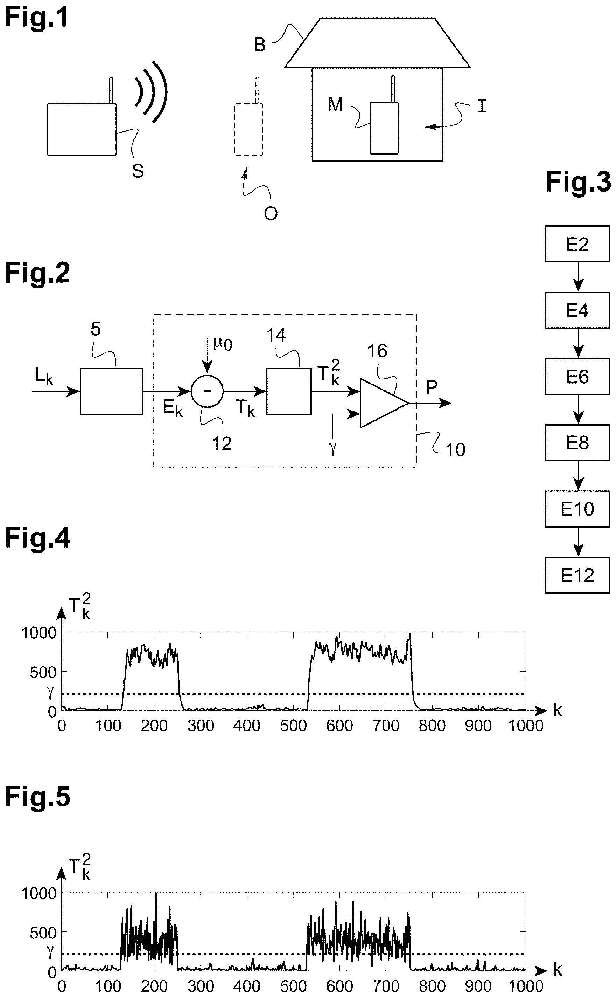

On a représenté schématiquement sur la figure 1 un contexte possible de mise en œuvre de l'invention.

Un dispositif électronique M (ici un terminal mobile, ou *"équipement utilisateur"* selon la terminologie utilisée dans certaines normes) et un système de télécommunication S (ici une station de base d'un réseau de télécommunication mobile), distant relativement au dispositif électronique M, échangent entre eux des signaux portés par des ondes électromagnétiques émises par le système de télécommunication S et reçues par le dispositif électronique M, ou, réciproquement, émises par le dispositif électronique M et reçues par le système de télécommunication S.

Comme expliqué dans la suite, on cherche ici à déterminer si le dispositif électronique M est situé à l'intérieur d'un (quelconque) bâtiment B (c'est-à-dire dans un environnement intérieur) ou à l'extérieur de tout bâtiment (c'est-à-dire dans un environnement extérieur), autrement dit à détecter la position intérieure I ou extérieure O du dispositif électronique M.

Une telle détection est réalisée par un module électronique tel que décrit ci-dessous en référence à la figure 2 sur la base d'une valeur (obtenue par mesure) d'une grandeur caractéristique d'un signal échangé entre le dispositif électronique M et le système de télécommunication S.

Cette grandeur caractéristique est par exemple un rapport entre une puissance utile du signal et une puissance de perturbations affectant ce signal, tel que le rapport signal sur interférences et bruit (ou SINR pour *"Signal to Inteference plus Noise Ratio"*), ou en pratique le logarithme d'un tel rapport. D'autres grandeurs sont également utilisables (de même que le logarithme de ces grandeurs) telles que la différence entre le rapport signal sur interférences et bruit montant (*"Uplink SINR"*) et le rapport signal sur interférences et bruit descendant (*"Downlink SINR"*), ou le rapport signal sur bruit (ou SNR pour *"Signal to Noise Ratio"*), ou bien la puissance du signal reçu (ou RSSI pour *"Received Signal Strengh Indicator"*), ou encore la puissance de réception d'un signal de référence (ou RSRP pour *"Reference Signal Received Power"*). Comme cela ressortira de la suite, on utilise de préférence une grandeur dont les valeurs suivent une loi de probabilités (ou distribution) gaussienne (ou loi normale).

Un tel module électronique peut faire partie du système de télécommunication S, ou du dispositif électronique M, ou encore d'un autre dispositif électronique (distinct du système de télécommunication S et du dispositif électronique M).

La mesure de la grandeur caractéristique du signal échangé peut être effectuée par l'entité électronique (système de télécommunication S, ou dispositif électronique M, ou autre dispositif électronique) qui intègre en son sein le module électronique.

Par exemple, lorsque le dispositif électronique M émet un signal à destination du système de télécommunication S et que le système de télécommunication S intègre le module électronique, le système de télécommunication S peut mesurer la grandeur caractéristique du signal reçu en provenance du dispositif électronique M, de sorte que le module électronique (réalisé par exemple conformément à la figure 2 décrite ci-dessous) puisse détecter la position intérieure ou extérieure du dispositif électronique M sur la base des valeurs mesurées.

En variante, la mesure de la grandeur caractéristique du signal échangé peut être effectuée par une autre entité électronique que l'unité électronique qui intègre en son sein le module électronique, auquel cas cette autre entité électronique transmet les valeurs mesurées à l'entité électronique intégrant le module électronique.

Par exemple, en cas d'émission d'un signal par le système de télécommunication S et de réception de ce signal par le dispositif électronique M, le dispositif électronique M peut mesurer une grandeur caractéristique du signal reçu et transmettre les valeurs mesurées au système de télécommunication S afin qu'un module électronique intégré au système de télécommunication S et réalisé conformément à ce qui est décrit ci-dessous en référence à la figure 2 détecte la position intérieure ou extérieure de ce dispositif électronique M sur la base des valeurs mesurées reçues par le système de télécommunication S.

La figure 2 représente les éléments d'un module électronique permettant de détecter la position intérieur ou extérieure d'un dispositif électronique.

Ce module électronique comprend un filtre de Kalman 5 et une unité de comparaison 10.

Le filtre de Kalman 5 reçoit en entrée des valeurs successives $L_k$ (respectivement associées à différents instants de mesure) d'une grandeur caractéristique du signal échangé afin de produire en sortie (pour chacun de ces instants de mesure) une estimation filtrée $E_k$ de cette grandeur caractéristique.

Cette grandeur caractéristique est ici le logarithme du rapport signal sur interférences et bruit (SINR).

Pour chaque instant de mesure (ou autrement dit pour chaque valeur $L_k$ de la grandeur caractéristique), le filtre de Kalman 5 effectue :

- une phase de prédiction au cours de laquelle on utilise l'estimation filtrée $E_{k-1}$ obtenue pour l'instant précédent en tant que prédiction $E^p_k$ de l'état pour l'instant courant ($E^p_k = E_{k-1}$) et au cours de laquelle la prédiction $P^p_k$ de la variance de l'état pour l'instant courant est obtenue en ajoutant une variance d'évolution Q (ou *process variance*) à la variance de l'état estimée à l'instant précédent $P_{k-1}$, soit $P^p_k = P_{k-1} + Q$ (la variance d'évolution Q étant par exemple déterminée en fonction de la variance du bruit de mesure R, avec ici Q = 0,1.R) ;
- une phase de mise à jour au cours de laquelle le gain de Kalman K est déterminé comme le rapport entre la prédiction $P^p_k$ de la variance de l'état et la somme de cette prédiction $P^p_k$ et de la variance du bruit de mesure R ($K=P^p_k/(P^p_k+R)$), au cours de laquelle l'estimation filtrée $E_k$ est obtenue en ajoutant à la prédiction $E^p_k$ de l'état le produit du gain de Kalman K et de la différence obtenue en soustrayant la prédiction $E^p_k$ de l'état à la valeur $L_k$ reçue en entrée du filtre de Kalman 5 ($E_k = E^p_k + K.(L_k - E^p_k)$), et au cours de laquelle la variance $P_k$ de l'état est estimée en multipliant la prédiction $P^p_k$ de la variance de l'état par un facteur obtenu en soustrayant le gain de Kalman au nombre 1 : $P_k = (1-K).P^p_k$ (toutes ces valeurs étant relatives à l'instant courant, repéré par l'indice k).

L'état estimé dans ce filtre de Kalman 5 est donc la grandeur caractéristique elle-même.

Pour déterminer l'estimation filtrée courante $E_k$, le filtre de Kalman 5 n'utilise ici que des valeurs relatives à l'instant précédent et à l'instant courant, et le module électronique n'a donc pas besoin de mémoriser un historique des valeurs passées (comme cela pourrait être le cas en utilisant d'autres solutions de filtrage).

L'unité de comparaison 10 est quant à elle conçue pour comparer une valeur statistique $T_k^2$ déterminée en fonction de l'estimation filtrée $E_k$ à un seuil afin de détecter la position intérieure ou extérieure du dispositif électronique M.

On considère ici que les valeurs de l'estimation filtrée $E_k$ peuvent être conformes à deux distributions de probabilités distinctes selon que le dispositif électronique M a une position intérieure ou une position extérieure :

- dans l'hypothèse $H_0$ où le dispositif électronique M est à l'extérieur, les valeurs de l'estimation filtrée $E_k$ sont conformes à une distribution gaussienne de valeur moyenne (ou espérance) $\mu_0$ et d'écart-type $\sigma_0$ (ou, autrement dit, de variance $\sigma_0^2$) ;
- dans l'hypothèse $H_1$ où le dispositif électronique M est à l'intérieur, les valeurs de l'estimation filtrée $E_k$ sont conformes à une distribution gaussienne de valeur moyenne (ou espérance) $\mu_1$ et d'écart-type $\sigma_1$ (ou, autrement dit, de variance $\sigma_1^2$).

On introduit la métrique statistique $T_k = E_k - \mu_0$ (cette métrique statistique $T_k$ est ainsi la différence entre l'estimation filtrée $E_k$ et la valeur moyenne $\mu_0$).

Les densités de probabilités des distributions gaussiennes peuvent alors s'écrire :

- pour l'hypothèse $H_0$ (dispositif électronique M à l'extérieur) :

$$P(T_k|H_0) = \frac{1}{\sqrt{2\pi\sigma_0^2}} \exp\left(-\frac{T_k^2}{2\sigma_0^2}\right)$$

- pour l'hypothèse $H_1$ (dispositif électronique M à l'intérieur) :

$$P(T_k|H_1) = \frac{1}{\sqrt{2\pi\sigma_1^2}} \exp\left(-\frac{(T_k - \Delta\mu)^2}{2\sigma_1^2}\right)$$

avec $\Delta\mu = \mu_1 - \mu_0$.

Pour détecter la position intérieure (hypothèse $H_1$) ou extérieure (hypothèse $H_0$) du dispositif électronique M, l'unité de comparaison 10 utilise le critère de décision de Neyman-Pearson :

$$\Lambda \overset{H_1}{\underset{H_0}{\overset{>}{<}}} \eta$$

où $\eta$ est un seuil réglant le taux de fausse alarme et $\Lambda$ le rapport de vraisemblance :

$$\Lambda = \frac{P(T_k|H_1)}{P(T_k|H_0)} = \frac{\sigma_0}{\sigma_1} \exp\left(\frac{T_k^2}{2\sigma_0^2} - \frac{(T_k - \Delta\mu)^2}{2\sigma_1^2}\right)$$

L'unité de comparaison 10 utilise ici le test du rapport de vraisemblance généralisé (ou GLRT pour *"Generalized Likelihood Ratio Test"*) qui reprend le critère défini ci-dessus en fixant certains paramètres à des valeurs estimées de ces paramètres, ici les paramètres $\Delta\mu$, $\sigma_0$ et $\sigma_1$ :

- le paramètre $\widehat{\Delta\mu}$ est estimé par l'estimateur du maximum de vraisemblance (ou MLE pour *"Maximum Likelihood Estimate"*) dans l'hypothèse $H_1$ :

$$\widehat{\Delta\mu} = \underset{\Delta\mu}{\mathrm{argmax}} \frac{1}{\sqrt{2\pi\sigma_1^2}} \exp\left(-\frac{(T_k - \Delta\mu)^2}{2\sigma_1^2}\right) = T_k$$

- les écarts-types sont considérés égaux entre eux et à une même valeur estimée $\hat{\sigma}$ : $\sigma_0 = \sigma_1 = \hat{\sigma}$.

Les valeurs $\hat{\sigma}$ et $\mu_0$ peuvent être estimées par des essais préalables ou pendant une phase de calibration.
Autrement dit, l'unité de comparaison 10 applique le critère de Neyman-Pearson défini ci-dessus avec $\sigma_0 = \sigma_1 = \hat{\sigma}$ et $\Delta\mu = T_k$, de sorte que le rapport de vraisemblance peut s'écrire :

$$\Lambda = \exp\left(\frac{T_k^2}{2\hat{\sigma}^2}\right)$$

et le test effectué par l'unité de comparaison 10 revient à la comparaison suivante :

$$T_k^2 \overset{H_1}{\underset{H_0}{\overset{>}{<}}} 2\hat{\sigma}^2 \ln(\eta)$$

La variable statistique $T_k^2$ suit une distribution en khi carré à un degré de liberté sous l'hypothèse $H_0$ :

$$\frac{T_k^2}{\hat{\sigma}^2} \sim \chi^2(1)$$

et le test effectué par l'unité de comparaison 10 peut donc s'écrire :

$$T_k^2 \overset{H_1}{\underset{H_0}{\overset{>}{<}}} \hat{\sigma}^2 \chi_{1-\alpha}^2(1)$$

où $\alpha$ est le taux de fausse alarme et $\chi_{1-\alpha}^2(1)$ correspond au $(1-\alpha)$-quantile de la distribution en khi carré avec un degré de liberté.
L'unité de comparaison 10 comprend un bloc de soustraction 12 qui soustrait la valeur $\mu_0$ à l'estimation filtrée $E_k$

reçue en entrée de l'unité de comparaison 10 de manière à obtenir la valeur $T_k$ de la métrique introduite ci-dessus.

L'unité de comparaison 10 comprend également un bloc de mise au carré 14 qui reçoit la valeur $T_k$ produite par le bloc de soustraction 12 et produit en sortie la valeur statistique $T_k^2$.

L'unité de comparaison 10 comprend enfin un bloc de comparaison 16 qui reçoit la valeur statistique $T_k^2$ produite par le bloc de mise au carré 14, compare cette valeur statistique $T_k^2$ à un seuil $\gamma$ et produit en sortie la position estimée P en fonction du résultat de la comparaison effectuée :

- si la valeur statistique $T_k^2$ est supérieure au seuil $\gamma$, la position estimée P indique que le dispositif électronique M est situé à l'intérieur d'un bâtiment ;
- si la valeur statistique $T_k^2$ est inférieure au seuil $\gamma$, la position estimée P indique que le dispositif électronique M est situé à l'extérieur.

Comme expliqué ci-dessus, la valeur du seuil $\gamma$ utilisée ici est le produit de l'écart type estimé $\hat{\sigma}$ et de la valeur $\chi^2_{1-\alpha}(1)$ du $(1-\alpha)$-quantile de la distribution en khi carré avec un degré de liberté, où $\alpha$ est le taux de fausse alarme. Le seuil $\gamma$ dépend donc ici du taux de fausse alarme souhaité.

La figure 3 est un logigramme montrant les étapes d'un procédé de détection de cette position intérieure ou extérieure.

Ce procédé est ici pour partie mis en œuvre dans le module électronique qui vient d'être décrit en référence à la figure 2. Précisément ici, les étapes E6 à E10 décrites ci-dessous sont mises en œuvre par le module électronique de la figure 2.

Le procédé débute par une étape E2 de mesure d'une valeur $L_k$ d'une grandeur caractéristique du signal échangé.

On se place par exemple ici dans le cas où le dispositif électronique M reçoit un signal porté par une onde électromagnétique émise par le système de télécommunication S et où le dispositif électronique M mesure (à différents instants successifs) une valeur $L_k$ du logarithme du rapport signal sur interférences et bruit (ou SINR) du signal reçu.

On considère par ailleurs ici que le module électronique de la figure 2 fait partie du système de télécommunication S.

Le procédé comprend alors une étape E4 (effectuée ici par le dispositif électronique M) de transmission de la valeur $L_k$ au système de télécommunication S de sorte que cette valeur $L_k$ est disponible pour traitement par le module électronique de la figure 2.

Ce module électronique peut ainsi appliquer la valeur $L_k$ en entrée du filtre de Kalman 5, ce qui permet de produire l'estimation filtrée correspondante $E_k$ en sortie du filtre de Kalman 5 (étape E6).

Le module de comparaison 10 détermine (à l'aide du bloc de soustraction 12 et du bloc de mise au carré 14) la valeur statistique $T_k^2$ en fonction de l'estimation filtrée $E_k$ (étape E8).

Comme expliqué plus haut, la valeur statistique $T_k^2$ est ici calculée par mise au carré de la différence entre l'estimation filtrée $E_k$ et la valeur $\mu_0$.

Le module de comparaison 10 compare alors la valeur statistique $T_k^2$ au seuil $\gamma$ défini plus haut (étape E10) afin de déterminer la position estimée P (intérieure ou extérieure) du dispositif électronique M.

Le procédé de la figure 3 peut éventuellement comprendre ensuite une étape E12 d'allocation de ressources (fournies par un réseau de télécommunication comprenant le système de communication S) au dispositif électronique M, cette allocation étant réalisée en fonction de la position estimée P.

Afin de bien faire comprendre l'intérêt de l'utilisation du filtre de Kalman dans le module électronique de la figure 2, les figures 4 et 5 représentent l'évolution de la valeur statistique $T_k^2$ respectivement lors d'une utilisation de ce module électronique et lors d'une utilisation d'un module électronique similaire mais dépourvu de filtre de Kalman.

Précisément, chacune des figures 4 et 5 représente les valeurs statistiques $T_k^2$ successivement obtenues pour 1000 instants de mesure (i.e. k variant de 1 à 1000) alors que le dispositif électronique M traverse des environnements extérieurs (détectés par $T_k^2 < \gamma$) et des environnements intérieurs (détectés par $T_k^2 > \gamma$). Dans ces figures, le seuil $\gamma$ utilisé est celui obtenu d'après les formules données plus haut pour un taux de fausse alarme de 0,1%.

Comme cela ressort des figures 4 et 5, la présence du filtre de Kalman dans le module électronique de la figure 2 améliore nettement la robustesse de la détection.

La description qui précède n'est qu'un mode possible de mise en œuvre de l'invention.

En particulier, afin d'améliorer encore la robustesse, il est possible d'utiliser une valeur statistique agrégée obtenue par sommation de n valeurs $T_k^2$ successives et de comparer cette valeur statistique agrégée $\sum_k T_k^2$ à un seuil pour déterminer la position intérieure ou extérieure du dispositif électronique M. Le seuil est dans ce cas basé sur la distribution en khi carré à n degrés de liberté $\chi^2(n)$.

**Revendications**

1. Procédé de détection de la position intérieure (I) ou extérieure (O) d'un dispositif électronique (M) échangeant un signal porté par des ondes électromagnétiques avec un système de télécommunication distant (S), le procédé comprenant les étapes suivantes :

   - mesure (E2) d'une valeur ($L_k$) d'une grandeur caractéristique du signal échangé ;
   - application (E6) de la valeur mesurée ($L_k$) en entrée d'un filtre de Kalman (5) produisant en sortie une estimation filtrée ($E_k$) de ladite grandeur ;
   - comparaison (E10) d'une valeur statistique ($T_k^2$) déterminée en fonction de ladite estimation filtrée ($E_k$) à un seuil ($\gamma$) afin de détecter la position intérieure (I) ou extérieure (O) du dispositif électronique (M).

2. Procédé selon la revendication 1, dans lequel la valeur statistique ($T_k^2$) dépend d'un rapport de vraisemblance de deux hypothèses statistiques respectivement représentatives des positions intérieures et des positions extérieures du dispositif électronique (M).

3. Procédé selon la revendication 1 ou 2, dans lequel ladite grandeur est un logarithme d'un rapport entre une puissance utile du signal et une puissance de perturbations affectant ce signal.

4. Procédé selon la revendication 3, dans lequel ladite grandeur est un logarithme d'un rapport signal sur interférences et bruit.

5. Procédé selon l'une des revendications 1 à 4, dans lequel ladite comparaison utilise un test de rapport de vraisemblance généralisé.

6. Procédé selon l'une des revendications 1 à 5, dans lequel le seuil ($\gamma$) est déterminé en fonction d'un taux de fausse alarme souhaité.

7. Procédé selon l'une des revendications 1 à 6, comprenant une étape (E12) au cours de laquelle sont allouées, au dispositif électronique (M) et en fonction de la position estimée, des ressources d'un réseau de télécommunication comprenant le système de télécommunication distant (S).

8. Module électronique de détection de la position intérieure (I) ou extérieure (O) d'un dispositif électronique (M) échangeant un signal porté par des ondes électromagnétiques avec un système de télécommunication distant (S), **caractérisé par** :

   - un filtre de Kalman (5) configuré pour recevoir une valeur ($L_k$) d'une grandeur caractéristique du signal échangé et produire une estimation filtrée ($E_k$) de ladite grandeur ;
   - une unité de comparaison (10) configurée pour comparer une valeur statistique ($T_k^2$) déterminée en fonction de ladite estimation filtrée ($E_k$) à un seuil afin de détecter la position intérieure (I) ou extérieure (O) du dispositif électronique (M).

9. Module électronique selon la revendication 8, dans lequel la valeur statistique ($T_k^2$) dépend d'un rapport de vraisemblance de deux hypothèses statistiques respectivement représentatives des positions intérieures et des positions extérieures du dispositif électronique.

10. Module électronique selon la revendication 8 ou 9, intégré dans ledit dispositif électronique (M).

11. Module électronique selon la revendication 8 ou 9, intégré dans ledit système de télécommunication distant (S).

# Fig.1

# Fig.2

# Fig.3

# Fig.4

# Fig.5

Europäisches Patentamt

European Patent Office

Office européen des brevets

**RAPPORT DE RECHERCHE EUROPEENNE**

Numéro de la demande

EP 25 22 3133

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EMMANUELLE VILLEBRUN ET AL: "Indoor Outdoor User Discrimination in Mobile Wireless Networks", 2006 IEEE 64TH VEHICULAR TECHNOLOGY CONFERENCE : VTC 2006-FALL ; 25 - 28 SEPTEMBER 2006, MONTREAL, QUEBEC, CANADA, PISCATAWAY, NJ : IEEE OPERATIONS CENTER, 1 septembre 2006 (2006-09-01), pages 1-5, XP031051508, ISBN: 978-1-4244-0062-1 * le document en entier * ----- | 1-11 | INV. G01S5/00 |
| Y | US 2019/346543 A1 (KHAN MUHAMMAD IRSHAN [FI] ET AL) 14 novembre 2019 (2019-11-14) * alinéa [0060] - alinéa [0085] * * figures 1-11 * * abrégé * ----- | 1-11 | |
| Y | BEIGI KARAMAT ET AL: "An Intelligent Indoor Positioning Algorithm Based on Wi-Fi and Bluetooth Low Energy", 2024 IEEE WIRELESS COMMUNICATIONS AND NETWORKING CONFERENCE (WCNC), IEEE, 21 avril 2024 (2024-04-21), pages 1-6, XP034630843, DOI: 10.1109/WCNC57260.2024.10570531 * le document en entier * ----- | 1-11 | **DOMAINES TECHNIQUES RECHERCHES (IPC)** G01S |
| Y | US 2020/389764 A1 (JEONG JAEHOON [KR] ET AL) 10 décembre 2020 (2020-12-10) * alinéa [0030] - alinéa [0080] * * abrégé; figures 1-28 * ----- | 1-11 | |

Le présent rapport a été établi pour toutes les revendications

| Lieu de la recherche | Date d'achèvement de la recherche | Examinateur |
|---|---|---|
| Munich | 2 avril 2026 | Galmiche, Aurélien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

## EP 4 764 585 A1

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2026

| Document brevet cité au rapport de recherche | Date de publication | Membre(s) de la famille de brevet(s) | | Date de publication |
|---|---|---|---|---|
| US 2019346543 A1 | 14-11-2019 | CN | 107250830 A | 13-10-2017 |
| | | EP | 3234628 A1 | 25-10-2017 |
| | | EP | 3869220 A1 | 25-08-2021 |
| | | US | 2018275261 A1 | 27-09-2018 |
| | | US | 2019346543 A1 | 14-11-2019 |
| | | WO | 2016096029 A1 | 23-06-2016 |
| US 2020389764 A1 | 10-12-2020 | AUCUN | | |

Pour tout renseignement concernant cette annexe : voir Journal Officiel de l'Office européen des brevets, No.12/82

**RÉFÉRENCES CITÉES DANS LA DESCRIPTION**

**Littérature non-brevet citée dans la description**

- **E. VILLEBRUN** ; **A. BEN HADJ ALAYA** ; **Y. BOURSIER** ; **N. NOISETTE**. Indoor outdoor user discrimination in mobile wireless networks. *IEEE Vehicular Technology Conference*, September 2006